# EUROPÄISCHE PATENTSCHRIFT

(11) **EP 1 759 830 B1**
(45) Veröffentlichungstag und Bekanntmachung des Hinweises auf die Patenterteilung: **15.10.2008**
(21) Anmeldenummer: 06116025.5
(22) Anmeldetag: 26.06.2006
(51) Int. Cl.: B29D 30/06

(54) **Verfahren zur Herstellung eines Verstärkungsprofils eines notlauffähigen Fahrzeugluftreifens**
Method of manufacturing a reinforcing profile of a run-flat tyre
Procédé de fabrication d'un profilé de renforcement d'un pneumatique pour roulage à plat

(30) Priorität: 02.09.2005 DE 102005041753
(43) Veröffentlichungstag der Anmeldung: 07.03.2007
(73) Patentinhaber: Continental Aktiengesellschaft, 30165 Hannover (DE)
(72) Erfinder: Frerichs, Udo, 30855 Langenhagen (DE)

(56) Entgegenhaltungen:
- EP-A1- 1 512 524
- GB-A- 191 322 008
- US-A- 3 580 781
- US-A- 3 991 151

## Beschreibung

Die Erfindung betrifft ein Verfahren zur Herstellung eines Verstärkungsprofils eines notlaufgeeigneten Fahrzeugluftreifens in radialer Bauart mit einem profiliertem Laufstreifen, einem insbesondere mehrlagigen Gürtelverband, einer Innenschicht, einer zumindest einlagig ausgeführten Karkasse, welche in Wulstbereichen um Wulstkeme unter Bildung eines Lagenumschlages geführt ist, Seitenwänden und mit je einem im Bereich jeder Seitenwand eingebrachten Verstärkungsprofil, welches zwischen der Innenschicht und der Karkasse eingebracht ist.

Derartige, im Pannenfall selbsttragende Fahrzeugluftreifen, sind schon seit längerem bekannt. Die im Bereich der Seitenwände des Reifens eingebauten Verstärkungsprofile werden bezüglich ihrer Querschnittsform und bezüglich der Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleitung selbsttragend zu erhalten. Ein selbsttragender Reifen der eingangs genannten Art ist beispielsweise aus der DE 23 31 530 A bekannt. Die Verstärkungselemente sind hierbei in der Regel mondsichelförmig, wobei jedoch auch schon andere Formen beschrieben wurden, beispielsweise in der EP 1 361 078 A1, welche ein etwa S-förmiges Verstärkungsprofil beschreibt. Die elastomeren Verstärkungselemente weisen jeweils eine maximale Dicke von 3 % bis 15 % der maximalen Breite des unter Innendruck befindlichen Reifens auf. Bei anderen bekannten Ausführungen besteht dass die Selbsttragefähigkeit des Reifens gewährleistende Verstärkungsprofil aus mehreren Profilteilen unterschiedlicher Härten. Eine derartige Ausführung ist beispielsweise aus der DE 29 43 654 A bekannt.

Die Herstellung der Verstärkungsprofile erfolgt üblicherweise durch Extrudieren, d. h., eine Kautschukmischung wird durch eine Düse mit einem entsprechenden Querschnitt durchgedrückt und verlässt den Extruder als endloses Band im plastischen Zustand, welches abgekühlt auf eine Trommel aufgewickelt und zu einer Reifenaufbaumaschine weitertransportiert wird. Dort wird es von der Rolle abgewickelt und abgelängt und zusammen mit den anderen Reifenbauteilen auf die Reifenaufbautrommel aufgelegt und zu einem Reifenrohling konfektioniert, welcher anschließend in einer Vulkanisationsform vulkanisiert wird. Ein derartiges Verfahren ist aus der EP 1512524 A bekannt geworden.

Das Herstellen des Verstärkungsprofils mittels Extruder hat sich weitgehend bewährt, weist jedoch eine Reihe von Nachteilen auf. So neigt das extrudierte Band materialbedingt dazu, seine Form zu verändern, insbesondere zu schrumpfen, was insbesondere beim noch warmen Aufwickeln auf die Zwischentrommel begünstigt wird. Eine Formveränderung kann sich aber nachteilig auswirken und den späteren Reifen negativ beeinflussen. Dies gilt insbesondere im Hinblick auf Reifenunwuchten, Reifengleichförmigkeit, die Gefahr von Lufteinschlüssen, und dergleichen, vor allem aber auch auf eine ausreichend lange Pannenlauffähigkeit.

Aufgabe vorliegender Erfindung ist es daher, ein alternatives Verfahren zu schaffen, mit dem Verstärkungsprofile für die eingangs genannten Fahrzeugluftreifen hergestellt werden können, wobei die Gefahr von Formveränderungen während des Herstellungsprozesses des Fahrzeugreifens weitgehend ausgeräumt werden sollen. Ferner ist es ein Ziel der Erfindung, neue Möglichkeiten der Materialkombination zu eröffnen.

Diese Aufgabe wird mit einem Verfahren der eingangs geschilderten Art gelöst, welche die Merkmale des Patentanspruchs 1 aufweist.

Auf überraschend einfache Art wird die Aufgabe also dadurch gelöst, dass eine Kautschukmischung zunächst zu einer Tafel kalandriert wird, wobei die Tafel eine Dicke von 4 - 25 mm, eine Länge von 4 - 10 m und eine Breite von 0,4 - 1,8 m aufweist.

Anschließend wird durch die Tafel wenigstens ein Längsschnitt geführt, und zwar in einem Schnittwinkel von 15 - 45° zur Horizontalen, wodurch wenigstens ein Streifen aus der Tafel ausgeschnitten wird. Dieser Streifen, welcher das Verstärkungsprofil bildet, wird anschließend zu einer Reifenaufbaumaschine überführt und mit den weiteren Bestandteilen des Fahrzeugluftreifens zu einem fertigen Reifen komplettiert.

Der Erfinder wendet sich also bewusst von den üblichen, auf schnelle Massenprodukt gerichteten Verfahren ab und wählt ein Herstellungsverfahren für die Verstärkungsprofile, welches in erster Linie auf Qualität ausgelegt ist, aber dennoch für das Massenproduktion tauglich ist. Denn die aus der Tafel geschnittenen Streifen, welche das Verstärkungsprofil bilden, gewährleisten durch das Schnittverfahren aus einer ebene liegenden Tafel eine hohe Qualität bezüglich der Form und der Formbeständigkeit.

Ferner bietet das Verfahren Möglichkeiten, die mit dem herkömmlichen Extrudierverfahren nicht realisierbar sind. So ist es möglich, was gemäß weiteren Ansprüchen vorgesehen ist, aus mehreren dünnen Tafeln unterschiedlicher Zusammensetzung und Dicke entsprechend dünnen Streifen zu schneiden und diese aufeinander zu schichten, so dass hierdurch insgesamt ein Verstärkungsprofil in SandwichBauweise entsteht, dessen einzelne Lagen unterschiedliche Materialzusammensetzungen aufweisen können, um hierdurch gezielt und sehr fein die späteren Reifeneigenschaften beeinflussen zu können.

So ist es beispielsweise möglich, die axial innerste Schicht des Verstärkungsprofils auf einem relativ weichen Kautschukmaterial aufzubauen, während die nachfolgenden, axial etwa mittleren Schichten aus einem relativ steifen Kautschukmaterial bestehen, während die axial äußersten Schichten wiederum des Verstärkungsprofils aus einem weichen Material bestehen können. Ferner ist es hierdurch auch möglich, zwischen die Schichten Gewebefäden und weitere Verstärkungselemente einzubauen, die sonst nur sehr schwer in das Verstärkungsprofil eingebracht werden könnten.

In Weiterbildung der Erfindung kann vorgesehen sein, die Tafel mit einer Dicke von 4 - 25 mm, einer Länge von 4 -10 m, und einer Breite von 0,4 -1,8 m zu kalandrieren, und/oder den Längsschnitt wechselnd in einem Winkel von 15 - 45° und einem Winkel von 135 - 175 ° zu führen, so dass jeweils Streifen aus der Tafel ausgeschnitten werden, welche einen in etwa trapezförmigen Querschnitt aufweisen. Alternativ ist es auch möglich, die Streifen aus der Tafel in einem stets gleichbleibenden Schnittwinkel herauszuschneiden. Um später zu einem etwa mondsichelförmigen Querschnitt zu gelangen, werden die Streifen dann auf der Bautrommel einseitig kontrolliert verformt.

Weitere Vorteile und Ausgestaltungen der Erfindung werden anhand von Ausführungsbeispielen in der Zeichnung sowie in den Patentansprüchen näher beschrieben. In der Zeichnung ist dargestellt:
- Fig. 1: schematisch ein Verfahrensschritt des erfindungsgemäßen Verfahrens anhand einer Kautschuktafel im Querschnitt,
- Fig. 2: eine alternative Schnittführung in einer Kautschuktafel
- Fig. 3: eine Kautschuktafel in perspektivischer Ansicht,
- Fig. 4: ein nach dem erfindungsgemäßen Verfahren gewonnenes Verstärkungselement im Querschnitt, und
- Fig. 5: eine schematische Darstellung des Herstellungsverfahrens.

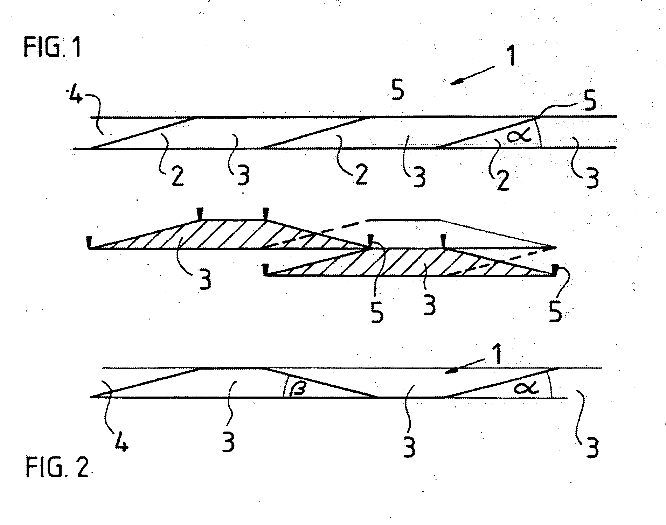

In Figur 1 ist eine Tafel 1 im Querschnitt dargestellt. Die Tafel 1 besteht aus einem geeigneten Kautschuk, welches zunächst durch eine Kalanderwalzenanordnung gewonnen wurde. Die Tafel 1 weist im dargestellten Ausführungsbeispiel eine Dicke von 4 - 25 mm, eine Länge von 4 -10 m und eine Breite von 0,4 -1,8 m auf. Nach dem Kalandrieren wird die Tafel auf eine ebene Unterlage geführt, wo ein nicht dargestelltes Schneidwerkzeug Schnitte 2 durch die Tafel 1 in Längsrichtung der Tafel 1 ausführt, wobei der Schnittwinkel α zwischen 15 und 45° beträgt. Durch die Schnitte 2 entstehen Streifen 3, welche nach Fertigstellung des nicht dargestellten Fahrzeugluftreifens ein Verstärkungselement im Seitenwandbereich des Fahrzeugluftreifens bilden. Randstücke 4 verbleiben als Abfallmaterial, das jedoch in den Kalander zurückgeführt werden kann, um zu einer neuen Tafel 1 verarbeitet werden zu können. Die durch die Schnitte 2 gewonnenen Streifen 3 sind in der unteren Hälfte von Figur 1 schematisch dargestellt. Zu erkennen ist, dass obere rechte Kanten 5 nach Abschluss der Schnitte 2 unten angeordnet sind, was dadurch erfolgt, dass die Streifen 3 jeweils soweit verformt werden, dass die Kanten 5 nach unten gelangen, wodurch die Streifen die Querschnittsform eines Trapezes erhalten. Kurzgefaßt werden die3 die Streifen von einer Parallelogrammform in eine Trapezform überführt. Das Verformen der geschnittenen Streifens 3 kann an der Reifenbaumaschine händisch erfolgen oder in einem Zwischenschritt durch eine maschinelle Anordnung, die hier nicht weiter dargestellt ist.

In Figur 2 ist eine alternative Ausgestaltung der Erfindung dargestellt, bei welcher die Tafel 1 derart geschnitten ist, dass die Schnittwinkel α, β alternierend zwischen 15 und 45° bzw. 135 und 175° betragen, so dass Streifen 3 entstehen, die bereits durch die Schnittführung die Querschnittsform eines Trapezes aufweisen. Besonders bevorzugt wird ein Schnittwinkel von 45° bzw. 175°.

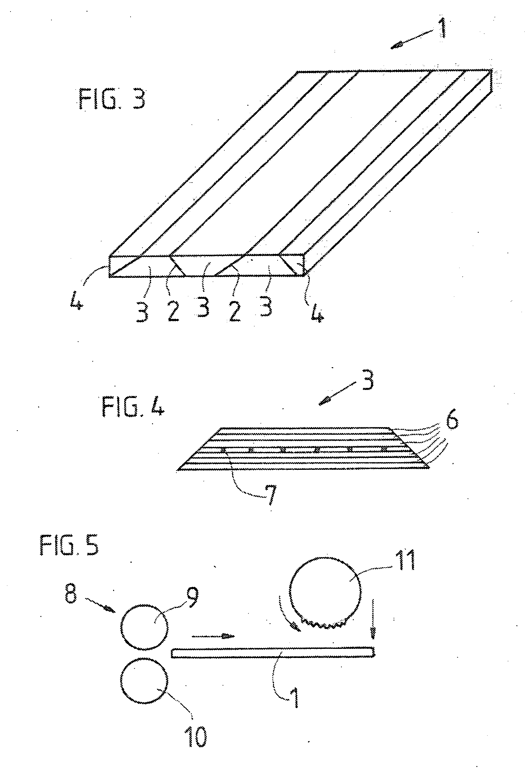

In Figur 3 ist schematisch eine Tafel 1 in perspektivischer Darstellung dargestellt. Auch diese weist Streifen 3 auf, welche durch Schnitte 2 aus der Tafel 1 herausgetrennt wurden.

In Figur 4 ist eine alternative Ausgestaltungsform eines durch das erfmdungsgemäße Verfahren gewonnene Verstärkungselement bzw. ein Streifen 3, welcher das Verstärkungselement bildet, dargestellt. Dieser Streifen 3 aus Figur 4 besteht aus mehreren Schichten 6, welche jeweils aus einer Tafel 1, entsprechend den oben beschriebenen Vorgängen, geschnitten wurden. Die Schichten 6 des Streifens 3 weisen unterschiedliche Materialzusammensetzungen auf, so dass schichtartig ein Verstärkungselement entsteht, das dann eine axiale Abfolge von unterschiedlichen Kautschukmaterialien aufweist, wodurch gezielt Reifeneigenschaften beeinflusst werden. Zwischen den Schichten 6 ist eine Lage aus Festigkeitsträgern 7 angeordnet, welche aus texilen oder metallischen Korden bestehen. Auch durch die Festigkeitsträger 7 lassen sich gezielt die Materialeigenschaften einstellen.

In Figur 5 ist schematisch das Verfahren dargestellt. Durch einen Kalander 8, welcher im gezeigten Ausführungsbeispiel aus zwei Walzen 9 und 10 besteht, wird Kautschukmaterial hindurchgepresst, wodurch die Tafel 1 gebildet wird. Anschließend erzeugt ein im Winkel α oder β angeordnetes Schneidwerkzeug 11 die Schnitte 2, wodurch die Streifen 3 aus der Tafel 1 herausgeschnitten werden.

### Bezugszeichenliste

- 1: Tafel
- 2: Schnitt
- 3: Streifen
- 4: Randstück
- 5: Kante
- 6: Schicht
- 7: Festigkeitsträger
- 8: Kalander
- 9: Walze
- 10: Walze
- 11: Schneidwerkzeug

## Patentansprüche

1. Verfahren zur Herstellung eines Verstärkungsprofils eines notlaufgeeigneten Fahrzeugluftreifen in radialer Bauart mit einem profilierten Laufstreifen, einem insbesondere mehrlagigen Gürtelverband, einer Innenschicht, einer zumindest einlagig ausgeführten Karkasse, welche in Wulstbereichen um Wulstkerne unter Bildung eines Lagenumschlages geführt ist, Seitenwänden und mit zumindest je einem im Bereich jeder Seitenwand angebrachten Verstärkungsprofil, welches zwischen der Innenschicht und der Karkasse eingebracht ist, **gekennzeichnet durch** folgende Verfahrensschritte:
- Kalandrieren einer Kautschukmischung zu einer Tafel (1)
- Anlegen von wenigstens zwei Längsschnitten (2) **durch** die Tafel (1) in einem Winkel α von 15 - 45° zur Horizontalen, wodurch wenigstens ein Streifen (3) aus der Tafel (1) ausgeschnitten wird,
- Überführen des Streifens (3) zu einer Reifenbaumaschine, und
- Einbau des Streifens (3) als Verstärkungsprofil in den Reifenrohling auf der Reifenbaumaschine.

2. Verfahren nach Anspruch 1, **dadurch gekennzeichnet, dass** abwechselnd der Schnittwinkel α,β einmal 15 - 45° zur Horizontalen und einmal 135 - 175° zur Horizontalen beträgt.

3. Verfahren nach Anspruch 1 oder 2, **dadurch gekennzeichnet, dass** die Tafel (1) mit einer Dicke von 4 - 25 mm, einer Länge von 4 - 10 m, und einer Breite von 0,4 - 1,8 m kalandriert wird.

4. Verfahren nach Anspruch 1 oder 2, **dadurch gekennzeichnet, dass** nach Schneiden des Streifens (3) aus der Tafel (1) der Streifen (3) von einer Parallelogramm form in eine Trapezform überführt wird, insbesondere dadurch, dass eine obere Kante (5) nach unten gedrückt wird.

5. Verfahren nach wenigstens einem der vorangegangenen Ansprüche, **dadurch gekennzeichnet, dass** Streifen (3) aus einer Mehrzahl von Tafeln (1) geschnitten werden, wobei die derart gewonnenen Streifen (3) entsprechend der Anzahl der Tafeln (1) übereinander geschichtet oder aneinander gesetzt werden.

6. Verfahren nach Anspruch 5, **dadurch gekennzeichnet, dass** wenigstens zwei Schichten (6) unterschiedliche Materialzusammensetzungen aufweisen.

7. Verfahren nach Anspruch 5, **dadurch gekennzeichnet, dass** wenigstens zwischen zwei Schichten (6) eines Streifens (3) ein Festigkeitsträger (7) angeordnet wird.

8. Verfahren nach Anspruch wenigstens einem der Ansprüche 1 bis 7, **dadurch gekennzeichnet, dass** zwei Teilstreifen, welche jeweils kürzer als der Streifen (3) sind, zur Bildung des Streifens (3) aneinandergelegt werden, wobei die Teilstreifen aus unterschiedlichen Materialien bestehen, insbesondere aus unterschiedlich harten Kautschukmischungen.

9. Verfahren nach Anspruch wenigstens einem der Ansprüche 1 bis 8, **dadurch gekennzeichnet, dass** eine Mehrzahl von Streifen (3) jeweils an ihren Endkanten schräg geschnitten werden, an ihren Schnittkanten zur Bildung eines Endlosbandes miteinander zusammengefügt und auf eine Lagerrolle aufgewickelt werden.

10. Verfahren nach Anspruch wenigstens einem der Ansprüche 1 bis 8, **dadurch gekennzeichnet, dass** eine Mehrzahl von Streifen (3) jeweils parallel auf einen planen Untergrund, insbesondere auf einen Buchwagen, zur Zwischenlagerung abgelegt werden.

## Claims

1. Method of manufacturing a reinforcing profile of a run-flat pneumatic vehicle tyre of a radial type, with a profiled tread rubber, a breaker belt assembly, in particular a multiply assembly, an inner layer, an at least single-ply carcass, which is led around bead cores in bead regions to form a ply turnup, sidewalls and at least one reinforcing profile respectively provided in the region of each sidewall, inserted between the inner layer and the carcass, **characterised by** the following method steps:
- calendering a rubber mixture to form a sheet (1),
- applying at least two longitudinal cuts (2) through the sheet (1) at an angle α of 15-45° to the horizontal, whereby at least one strip (3) is cut out of the sheet (1),
- transferring the strip (3) to a tyre building machine, and
- incorporating the strip (3) as a reinforcing profile in the green tyre on the tyre building machine.

2. Method according to Claim 1, **characterised in that** the cutting angle α, β is alternately 15-45° to the horizontal and 135-175° to the horizontal.

3. Method according to Claim 1 or 2, **characterised in that** the sheet (1) is calendered with a thickness of 4-25 mm, a length of 4-10 m, and a width of 0.4-1.8 m.

4. Method according to Claim 1 or 2, **characterised in that**, after cutting the strip (3) out of the sheet (1), the strip (3) is transferred from the form of a parallelogram into the form of a trapezoid, in particular by an upper edge (5) being pressed downwards.

5. Method according to at least one of the preceding claims, **characterised in that** strips (3) are cut out of a plurality of sheets (1), the strips (3) obtained in this way being stacked one on top of the other or set one against the other in a way corresponding to the number of sheets (1).

6. Method according to Claim 5, **characterised in that** at least two layers (6) have different material compositions.

7. Method according to Claim 5, **characterised in that** a strengthening support (7) is arranged at least between two layers (6) of a strip (3).

8. Method according to at least one of Claims 1 to 7, **characterised in that** two part-strips, which are each shorter than the strip (3), are laid one against the other to form the strip (3), the part-strips consisting of different materials, in particular of rubber mixtures of different hardnesses.

9. Method according to at least one of Claims 1 to 8, **characterised in that** a plurality of strips (3) are respectively cut obliquely at their end edges, joined together at their cut edges to form an endless band and wound up onto a storage roller.

10. Method according to at least one of Claims 1 to 8, **characterised in that** a plurality of strips (3) are respectively laid in parallel onto a planar underlying surface, in particular onto a tray truck, for intermediate storage.

## Revendications

1. Procédé de fabrication d'un profilé de renfort pour bandage pneumatique de véhicule permettant un roulage de secours, à structure radiale et doté d'une bande de roulement profilée, d'un ensemble de ceinture en particulier en plusieurs couches, d'une couche intérieure, d'une carcasse réalisée en au moins une couche et t passée autour des âmes de bourrelet en formant un rabat de couche dans les zones occupées par les bourrelets, de parois latérales dotées chacune d'un profilé de renfort installé dans la zone occupée par chaque paroi latérale et inséré entre la couche intérieure et la carcasse, lequel procédé est **caractérisé par** les étapes suivantes :
- calandrage d'un mélange de caoutchouc pour former une plaque (1),
- formation d'au moins deux découpes longitudinales (2) dans la plaque (1) à un angle α de 15 à 45° par rapport à l'horizontale, au moins une bande (3) étant découpée dans la plaque (1),
- transfert de la bande (3) dans une machine de construction de bandage et
- incorporation de la bande (3) comme profilé de renfort dans l'ébauche de bandage placée sur la machine de montage de bandage.

2. Procédé selon la revendication 1, **caractérisé en ce que** les angles α, β valent en alternance une fois de 15 à 45° par rapport à l'horizontale et une fois de 135 à 175° par rapport à l'horizontale.

3. Procédé selon les revendications 1 ou 2, **caractérisé en ce que** la plaque (1) est calandrée à une épaisseur de 4 à 25 mm, une longueur de 4 à 10 m et une largeur de 0,4 à 1,8 m.

4. Procédé selon les revendications 1 ou 2, **caractérisé en ce qu'**après découpe de la bande (3) dans la plaque (1), la bande (3) est amenée d'une forme de parallélogramme à une forme de trapèze, en particulier en repoussant vers le bas son bord supérieur (5).

5. Procédé selon au moins l'une des revendications précédentes, **caractérisé en ce que** l'on découpe des bandes (3) dans plusieurs plaques (1), les bandes (3) ainsi obtenues étant empilées les unes au-dessus des autres ou placées les unes contre les autres en correspondance au nombre de plaques (1).

6. Procédé selon la revendication 5, **caractérisé en ce qu'**au moins deux couches (6) sont en matériaux de compositions différentes.

7. Procédé selon la revendication 5, **caractérisé en ce qu'**un renfort (7) est disposé au moins entre deux couches (6) d'une bande (3).

8. Procédé selon au moins l'une des revendications 1 à 7, **caractérisé en ce que** deux parties de bande, chacune plus courte que la bande (3), sont placées l'une contre l'autre pour former la bande (3), les parties de bande étant constituées de matériaux différents et en particulier de mélanges de caoutchouc de duretés différentes.

9. Procédé selon au moins l'une des revendications 1 à 8, **caractérisé en ce que** plusieurs bandes (3) sont découpées obliquement sur chacun de leurs chants d'extrémité, sont assemblées l'une à l'autre sur leurs chants de coupe pour former une bande sans fin et sont enroulées sur un rouleau d'entreposage.

10. Procédé selon au moins l'une des revendications 1 à 8, **caractérisé en ce que** plusieurs bandes (3) sont déposées parallèlement les unes aux autres sur un soubassement plan, en particulier sur un chariot, pour être entreposées temporairement.
